(19) Europäisches Patentamt
European Patent Office
Office européen des brevets

(11) **EP 4 464 503 A1**

(12) **EUROPEAN PATENT APPLICATION**

(43) Date of publication:
**20.11.2024 Bulletin 2024/47**

(21) Application number: **24172401.2**

(22) Date of filing: **25.04.2024**

(51) International Patent Classification (IPC):
**B29C 64/393** (2017.01)   **B33Y 10/00** (2015.01)
**B33Y 50/00** (2015.01)   **B33Y 50/02** (2015.01)
**G06F 30/17** (2020.01)   **G06F 30/20** (2020.01)
**G06F 111/10** (2020.01)   **G06F 119/18** (2020.01)

(52) Cooperative Patent Classification (CPC):
**B33Y 50/00; B29C 64/386; B29C 64/393;
B33Y 10/00; B33Y 50/02; G06F 30/17;
G06F 30/20;** G06F 2111/10; G06F 2119/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2023 IN 202311034485**

(71) Applicant: **General Electric Company
Schenectady, NY 12345 (US)**

(72) Inventors:
• **OSGOOD, Daniel Endecott
12345 Schenectady (US)**

• **MUKUNDAN, Bathrinarayanan
12345 Schenectady (US)**
• **DABARIA, Vaibhav
12345 Schenectady (US)**
• **STEKLI, Justin Michael
12345 Schenectady (US)**
• **ZHANG, Xuefeng
12345 Schenectady (US)**
• **YANG, Pinghai
12345 Schenectady (US)**

(74) Representative: **Hafner & Kohl PartmbB
Schleiermacherstraße 25
90491 Nürnberg (DE)**

(54) **SYSTEMS AND METHODS PROVIDING SURFACE OFFSETS FOR ADDITIVE MANUFACTURING**

(57) A computer program product comprising a non-transitory computer-readable medium storing instructions, that when executed by a computer processor (330), cause the computer processor (330) to discretize distinct surfaces (110, 120, 130, 140, 150, 160, 170) of a 3D model (100) defining nominal geometry of a component (308) to be manufactured using an additive manufacturing machine; define a build orientation of the 3D model (100), the build orientation comprises an initial build plane and a build direction; applying one or more in-plane offsets (5, 10, 15, 20, 30, 40) to at least one of the discretized distinct surfaces (110, 120, 130, 140, 150, 160, 170) of the 3D model (100); and generate an offset 3D model (200) for use by the additive manufacturing machine to manufacture the component (308) such that a manufactured component comprises the nominal geometry defined by the 3D model (100), where the offset 3D model (200) defines the nominal geometry of the component (308) offset by the one or more in-plane offsets (5, 10, 15, 20, 30, 40) applied to the at least one of the discretized distinct surfaces (110, 120, 130, 140, 150, 160, 170) of the 3D model (100).

FIG. 1

EP 4 464 503 A1

**Description**

**TECHNICAL FIELD**

The present specification generally relates to systems, methods, and computer-program products for generating in-plane offsets for additive manufacturing.

**BACKGROUND**

Additive manufacturing (AM) processes are used to fabricate precision three-dimensional components from a digital model. Such components are fabricated using additive processes where successive layers of material are consolidated one on top of the other on a build plate in an additive manufacturing machine (AMM). Additive manufacturing processes include powder bed fusion, binder jet, direct energy deposition, material extrusion, material jetting, sheet lamination, and vat polymerization.

Digital models manufactured via additive processes are subjected to thermal, mechanical, and/or printer effects that cause the manufactured component to have different geometry than the nominal geometry of the digital model. To address manufacturing effects due to thermal, mechanical, and/or printer attributes, tedious and time-consuming design compensations must be engineered and designed into the original digital model.

**BRIEF DESCRIPTION OF THE DRAWINGS**

The embodiments set forth in the drawings are illustrative and exemplary in nature and are not intended to limit the disclosure. The following detailed description of the illustrative embodiments can be understood when read in conjunction with the following drawings, where like structure is indicated with like reference numerals and in which:

FIG. 1 depicts a perspective view of an illustrative 3D model of a component to be manufactured using an additive manufacturing machine, according to one or more embodiments shown and described herein;

FIG. 2A depicts a side view along a first axis of the build plane of the 3D model of the component with illustrative in-plane offsets applied to surfaces of the 3D model of the component, according to one or more embodiments shown and described herein;

FIG. 2B depicts a side view along a second axis of the build plane of the 3D model of the component with illustrative in-plane offsets applied to surfaces of the 3D model of the component, according to one or more embodiments shown and described herein;

FIG. 2C depicts a perspective view of an illustrative offset 3D model and a wireframe of the 3D model to which the in-plane offsets were applied to generate the offset 3D model of the component, according to one or more embodiments shown and described herein;

FIG. 2D depicts a side view along a first axis of the build plane of the offset 3D model and a wireframe of the 3D model to which the in-plane offsets were applied to generate the offset 3D model of the component, according to one or more embodiments shown and described herein;

FIG. 3A schematically depicts an illustrative system for generating offsets for a 3D model of a component and manufacturing the component using an additive manufacturing machine, according to one or more embodiments shown and described herein;

FIG. 3B schematically depicts an illustrative computing device implementing a computer program product for generating and applying in-plane offsets to a 3D model of the component for manufacturing using an additive manufacturing machine, according to one or more embodiments shown and described herein;

FIG. 4 depicts an illustration of an in-plane offset for one dimension of a build plane of a surface of a component, according to one or more embodiments shown and described herein;

FIG. 5 depicts an illustration of a corner correction for geometry associated with a concave corner structure of a component and a convex corner structure of a component, according to one or more embodiments shown and described herein;

FIG. 6 depicts a flow diagram of an illustrative method for generating and applying in-plane offsets to a digital 3D model of a component, according to one or more embodiments shown and described herein; and

FIG. 7 depicts a flow diagram of a second illustrative method for generating and applying in-plane offsets to a digital 3D model of a component, according to one or more embodiments shown and described herein.

## DETAILED DESCRIPTION

References will now be made in detail to the embodiments of the disclosure, examples of which are illustrated in the accompanying drawings. Whenever possible, like reference numbers will be used to refer to like components or parts.

Embodiments of the present disclosure address manufacturing effects due to thermal, mechanical, and/or printer attributes, without the need for tedious and time-consuming design compensations that must be engineered and designed into the original digital model. Further, embodiments address efforts to simplify offset compensations to the digital model that generally apply uniform compensations to in x-y-z planes but fail to preserve critical dimensions of the manufactured component. Embodiments of the present disclosure provide systems, methods, and computer-program products for generating and applying in-plane offsets to a 3D digital model of a component. The in-plane offsets are configured to address thermal effects and/or mechanical effects of materials the component is manufactured from using an additive manufacturing machine and/or attributes of the additive manufacturing machine.

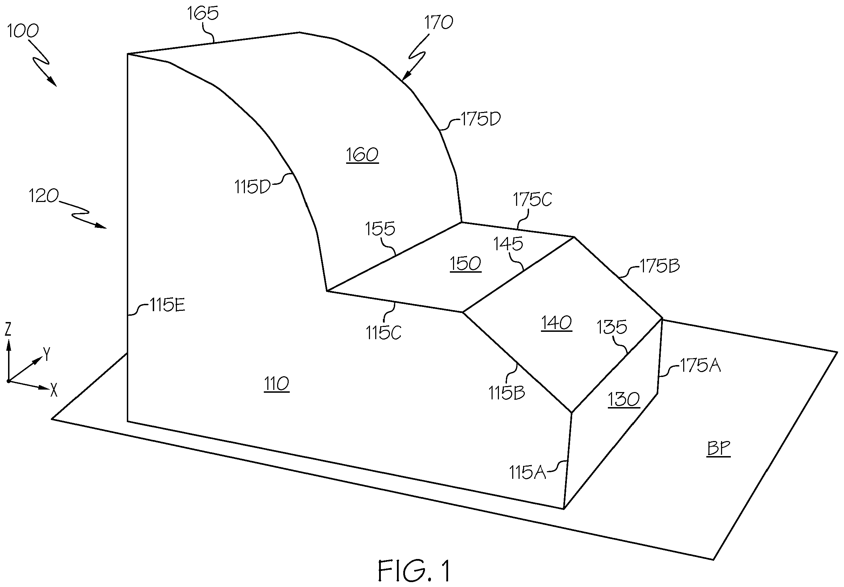

Additive manufacturing machines (AMMs) or additive manufacturing apparatuses (AMAs) include rapid-prototyping, rapid manufacturing device, or additive manufacturing devices such as a binder jet additive manufacturing, fused deposition modeling (FDM), stereolithography (SLA), digital light processing (DLP), selective laser sintering (SLS), selective laser melting (SLM), laminated object manufacturing (LOM), electron beam melting (EBM), and/or the like. In general, AMMs include a build plane (BP, FIG. 1) where a layer of working material is deposited and an energy source such as a laser, heat source, UV light, or other type of directed energy source is applied to the working material to cause bonding or transformation of the working material into a rigid material. The process is repeated by adding layer upon layer of working material onto the previous layer in a build direction (Z-axis, FIG. 1) that is typically perpendicular to the build plane BP. However, this is merely a general example of an additive manufacturing process as there are many different combinations of working materials, binders, and/or energy sources that are used to additively manufacture a component.

AMMs operate based on a set of additive manufacturing machine control commands that are typically generated by a slicing tool. Slicing tools receive a 3D model of a component, for example, as an STL file and apply a slicing algorithm that partitions the 3D model of the component into a plurality of build layers having a predefined thickness depending on the geometries of the component and the AMM that will manufacture the component. A set of additive manufacturing machine control commands may be embodied as a g-code file that defines a series of commands and associated values for the various components of the AMM to operate and manufacture the component. When an AMM manufactures the component based on the set of additive manufacturing machine control commands generated by the slicing tool, differences in size and shape between the nominal geometry defined in the 3D model of the component and the manufactured component built by the AMM may arise. These differences are due to thermal and/or mechanical effects of the working materials the component is manufactured from and their interaction with the energy source of the AMM. The differences may also be due to attributes of the AMM. For example, energy (e.g., light beam) from the energy source (e.g., a light projector) reflects and/or refracts within the working material causing an area larger than the area of the energy (e.g., light beam) directed to the working material to cure. More particularly, light shined onto the working material refracts and/or reflects within the working material resulting in areas, larger than the area of the working material the light shined onto, to harden, cure, and/or sinter. Attributes of the AMM include, but are not limited to, the area of the focal point (e.g., the spot size) of the energy impinging the working material, the power of the energy source, the dwell time of the energy source, and/or other attributes.

Accordingly, embodiments of the present disclosure provide systems, methods, and computer program products implementing the methods for generating and applying offsets to the 3D model defining nominal geometry of the component for manufacturing with an AMM. More specifically, the offsets that are generated and applied to the 3D model are in-plane offsets unlike generally applying perpendicular offsets to an entire component. That is, the application of perpendicular offsets to an entire component fails to account for particular surface geometries of the component and does not preserve the Z-heights of the component. Since AMMs manufacture components layer-by-layer by applying energy to portions of an X-Y plane (e.g., build plane BP), effects resulting from attributes of the AMM generally present themselves in the X-Y plane of the component build. Accordingly, offsets may be generated and applied specifically within sequential build planes perpendicular to the build direction (Z-axis).

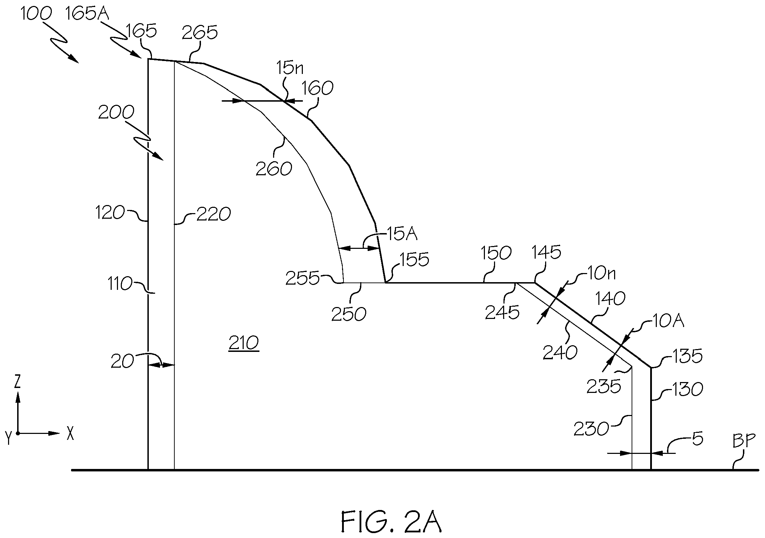

Various embodiments of the systems, methods, and computer program products implementing the methods are shown and described herein. Turning now to the drawings, wherein like numbers refer to like structures, and particularly to FIGs. 1-2D, depicted are illustrative 3D models and offset 3D models defining an offset nominal geometry of the component for manufacturing with the AMM. FIG. 1 depicts a perspective view of an illustrative 3D model 100 of a component to be manufactured using an AMM. For purposes of explanation of embodiments of the present disclosure, the illustrative 3D model 100 depicted in FIG. 1 and an offset 3D model 200 depicted in FIGS. 2A-2D will be used for reference. However, it should be understood that the systems and methods described herein may be applied to more complex 3D models.

The 3D model 100 depicted in FIG. 1 is positioned on a build plane BP. Additionally, for purposes of explanation of the embodiments described herein, the Z-axis direction corresponds to the build direction employed by the AMM to build the component from an initial build plane that corresponds to the surface of the build plane BP. The 3D model 100 of the component depicted in FIG. 1 includes a plurality of distinct surfaces 110, 120, 130, 140, 150, 160, 170 and a plurality of boundaries 115A, 115B, 115C, 115D, 115E, 135, 145, 155, 165, 175A, 175B, 175C, 175D connecting adjacent surfaces. As described in more detail herein, distinct surfaces 110, 120, 130, 140, 150, 160, 170 of the 3D model 100 may be discretized. That is, discretizing the distinct surfaces 110, 120, 130, 140, 150, 160, 170 includes defining a plurality of points for each of the distinct surfaces 110, 120, 130, 140, 150, 160, 170. Additionally, as described in more detail herein, application of the in-plane offsets adjusts the position of one or more of the plurality of points defining the contour of the surfaces 110, 120, 130, 140, 150, 160, 170.

Turning to FIGS. 2A-2D, FIGS. 2A-2D depict various illustrations of an offset 3D model 200 that is generated from the application of in-plane offsets 5, 10A-10n (referred to herein generally as 10), 15A-15n (referred to herein generally as 15), 20, 30, 40. Referring first to FIG. 2A, a side view along a first axis (X-axis) of the build plane BP of the 3D model 100 of the component with the illustrative in-plane offsets 5, 10, 15, 20 applied to the surfaces 120, 130, 140, 150, 160, 170 of the 3D model 100 of the component forming the offset 3D model 200 is depicted. Depending on the nominal geometry of the component and the attributes of the AMM, one or more in-plane offsets 5, 10, 15, 20 are defined and applied to surfaces 120, 130, 140, 150, 160, 170 of the 3D model 100. For example, an in-plane offset 5 is applied to surface 130 of the 3D model 100 adjusting the position of the points defining surface 130 to form an offset surface 230 of the offset 3D model 200. The in-plane offset 5 has a uniform magnitude that is applied in the X-direction of the build planes (X-Y planes) along the build direction for surface 130. For example, if the energy source of the AMM has a spot size diameter of 0.1 mm but when applied to the working material causes an area with a diameter of 0.2 mm to react to the energy source and cure a corresponding area of working material, an in-plane offset 5 is needed so that a geometry of a built component is not larger than the nominal geometry defined by the 3D model 100. In a similar fashion, surface 120 is offset by an in-plane offset 20 that is uniform in magnitude along the build direction.

For surface 140 an in-plane offset 10 (e.g., defined by a plurality of in-plane offsets 10A-10n) applied thereto may have the same or a varying magnitude offset in the X-direction or Y-direction for build planes along the build direction. Applying the in-plane offset 10 to surface 140 of the 3D model 100 forms an offset surface 240 of the offset 3D model 200. Moreover, the in-plane offsets 5 and 10 applied to surfaces 130 and 140 are merged forming boundary 235 so that a smooth transition between the adjacent surfaces is formed and boundary 135 defined by the nominal geometry of the 3D model 100 is preserved. Additionally, since surface 150 is in plane with the build plane BP, the in-plane offset of surface 150 corresponds to in-plane offset 10 (e.g., 10A-10n). As such, a new boundary 245 between surface 150 and surface 140 is defined that corresponds to the boundary 145 of the nominal geometry of the 3D model 100.

Referring now to surface 160, the surface 160 has a curved contour. For some curved contours, the magnitudes of the in-plane offsets, for example, in-plane offsets 15 (e.g., defined by a plurality of in-plane offsets 15A-15n) may vary, for example, according to an algorithmic relationship between the contour of the surface and the distance from the initial build plane BP in the build direction. For example, the magnitudes of the in-plane offsets 15A, 15n applied to a surface 160 extending to a Z-axis peak 265, may be tapered down in magnitude so that the Z-height (e.g., Z-axis peak 165A) of the component is preserved. In embodiments, offset values (e.g., defining in-plane offsets 15A-15n) are defined as offset vectors, for example, defined as six column vectors such as $\vec{q_i}(x_i,\ y_i,\ z_i,\ \delta x_i,\ \delta y_i,\ \delta z_i,)$, where $x_i,\ y_i,\ z_i,$ represent point coordinates and $\delta x_i,\ \delta y_i,\ \delta z_i,$ represent offset values along x, y, z, axis. For points defining each of the distinct surfaces 110, 120, 130, 140, 150, 160, 170, offset coordinates of any input nominal point may be calculated by the following formula:

$$P_{offset}(x,y,z) = P_{nominal}(x,y,z) + \sum_{i=0}^{n}\sum_{j=0}^{m}\sum_{k=0}^{l} N_{i,p}(x)N_{j,q}(y)N_{k,r}(z)\boldsymbol{P}_{i,j,k}, \quad (1)$$

where $\sum_{i=0}^{n}\sum_{j=0}^{m}\sum_{k=0}^{l} N_{i,p}(x)N_{j,q}(y)N_{k,r}(z)\boldsymbol{P}_{i,j,k}$ represents a morphing tensor field for the underlying component defined by a B-spline solid that is fit or interpolated from input offset vectors. Applying the in-plane offset 15 to surface 160 of the 3D model 100 forms an offset surface 260 of the offset 3D model 200.

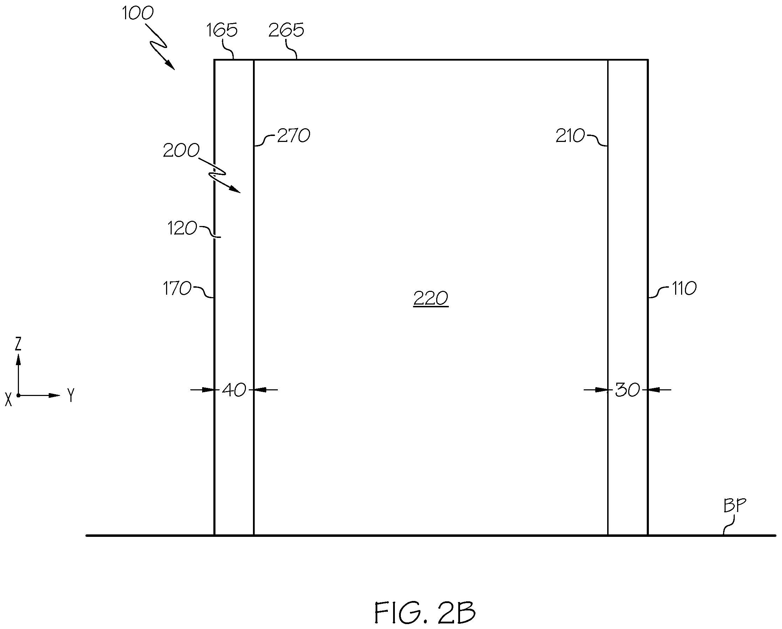

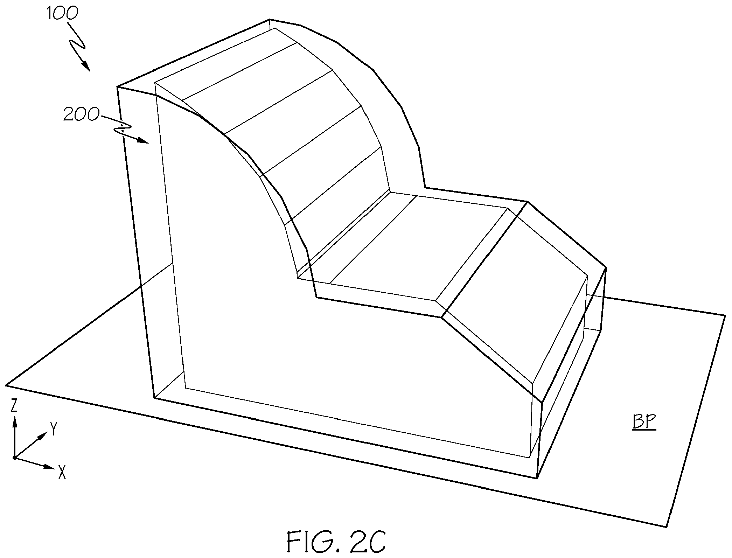

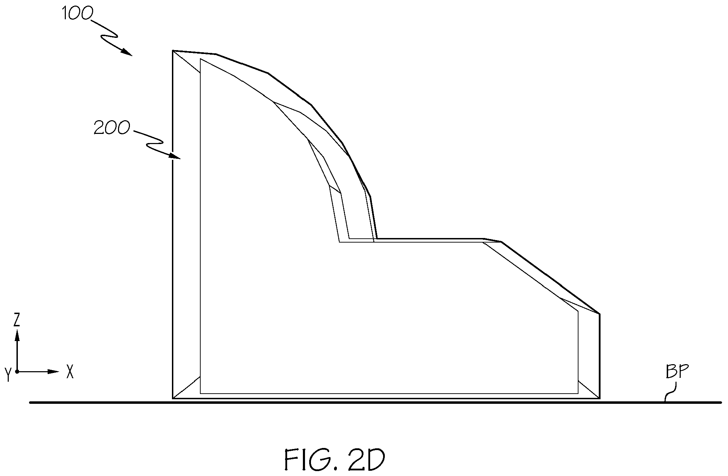

Turning to FIG. 2B, a side view along a second axis (Y-axis) of the build plane BP of the 3D model 100 of the component with illustrative in-plane offsets 30, 40 applied to surfaces 110, 170 of the 3D model 100 of the component forming the offset 3D model 200 is depicted. For example, an in-plane offset 30 is applied to surface 110 generating an offset surface 210 and in-plane offset 40 is applied to surface 170 generating an offset surface 270. With reference to FIGS. 2A and 2B, as described in more detail herein, after the in-plane offsets 5, 10, 15, 20, 30, 40 are applied to the surfaces of the 3D model 100 of the component they are merged or compiled together to form the offset 3D model 200. For example, FIGS. 2C and 2D depict a perspective view and a side view, respectively, along the first axis (X-axis) of the build plane of the offset 3D model 200 within a wireframe of the 3D model 100. The wireframe of the 3D model 100 is depicted to illustrate the resulting offset 3D model 200 in view of the combined in-plane offsets to the distinct surfaces 110, 120, 130, 140, 150, 160, 170 of the 3D model 100 defining the nominal geometry of the component, as described with regard to FIGS. 2A and 2B.

It should now be understood that the one or more offsets generated and applied to the surfaces 110, 120, 130, 140, 150, 160, 170 (FIGS. 2A and 2B) of the 3D model 100 adjust the position of points in their corresponding build plane (X-Y plane) along the build direction. The one or more in-plane offsets change the position of points defining the nominal geometry of the component in the 3D model 100 and the changes in position of the points occurs in a direction perpendicular to the build direction.

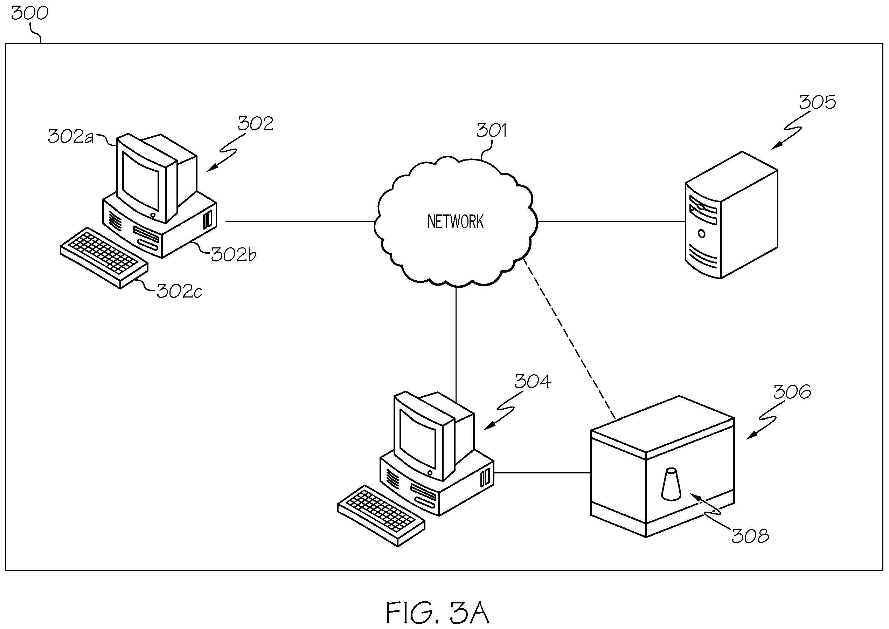

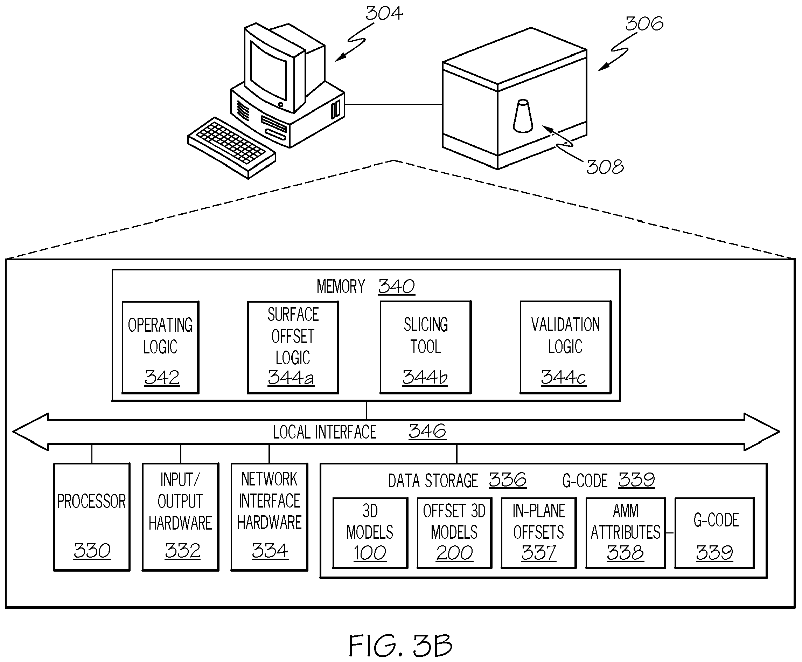

Referring now to FIGS. 3A and 3B, systems and computing devices for implementing the methods for generating and applying in-plane offsets to a 3D digital model of a component are depicted and will now be described in detail. In particular, FIG. 3A depicts an illustrative system 300 for generating in-plane offsets for a 3D model 100 (FIG. 1) of a component 308 and manufacturing the component 308 using an AMM 306. The system 300 may be deployed over a network 301. The network 301 may include a wide area network, such as the internet, a local area network (LAN), a mobile communications network, a public service telephone network (PSTN) and/or other network. The network 301 may be configured to electronically and/or communicatively connect a user computing device 302, a computing device 304, one or more data servers 305, and the AMM 306.

The user computing device 302 may include a display 302a, a processing unit 302b and an input device 302c, each of which may be communicatively coupled together and/or to the network 301. The user computing device 302 may be a server, a personal computer, a laptop, a tablet, a smartphone, a handheld device, or the like. The user computing device 302 may be used by a user of the system 300 to provide information to the system 300. For example, the user may generate a 3D model 100 (FIG. 1) of a component using CAD software or upload a 3D model 100 of a component 308 for manufacture, input or update AMM attributes, attributes of the working material, define or update in-plane offsets for surfaces of the 3D model 100, and/or the like from the computing device 304. The user computing device 302 may utilize a local application or a web application to access the computing device 304 and/or the AMM 306. The computing device 304 may host and provide an interactive interface to the user computing device 302 such that a user may query, select, and/or input information that may be relayed to the computing device 304 and/or the AMM 306. The system 300 may also include one or more data servers 305 having one or more databases from which information may be queried, extracted, updated, and/or utilized by the computing device 304 and/or the AMM 306.

The computing device 304 may be a server, a personal computer, a laptop, a tablet, a smartphone, an application specification handheld device, or the like. The computing device 304 may include a display and an input device each of which may be communicatively coupled together. The computing device 304, which is described in more detail herein, may be configured to host applications and execute processes described herein. It should be understood that while the user computing device 302 and one or more data servers 305 are depicted in the illustrative system of FIG. 3A, each of the functions and operations performed by the user computing device 302 and one or more data servers 305 may be embodied and configured by the computing device 304.

It is also understood that while the user computing device 302 and the computing device 304 are depicted as personal computers and the one or more data servers 305 is depicted as a server, these are merely examples. More specifically, in some embodiments, any type of computing device (e.g., mobile computing device, personal computer, server, and the like) may be utilized for any of these components. Additionally, while each of the computing devices are illustrated in FIG. 3A as a single piece of hardware, this is also an example. More specifically, each of the user computing device 302, the one or more data servers 305, and the computing device 304 may represent a plurality of computers, servers, databases, and the like. For example, each of the user computing device 302, the one or more data servers 305, and the computing device 304 may form a distributed or grid-computing framework for implementing the methods described herein.

As briefly described above, the AMM 306 may be any rapid-prototyping, rapid manufacturing device, or additive manufacturing device such as a binder jet additive manufacturing, fused deposition modeling (FDM), stereolithography (SLA), digital light processing (DLP), selective laser sintering (SLS), selective laser melting (SLM), laminated object manufacturing (LOM), electron beam melting (EBM), and/or the like. The AMM 306 may include a processor and memory and other electronic components for receiving the offset 3D model 200 or a slice file including a set of additive manufacturing machine control commands for building the component 308 based on the plurality of layers of the offset 3D model 200 with the AMM 306. For example, a slicing tool may be implemented to slice the offset 3D model 200 into a plurality of layers for building with the additive manufacturing machine and generate a slice file including a set of additive manufacturing machine control commands for building the component 308 based on the plurality of layers of the offset 3D model 200 with the AMM 306.

In some embodiments, the system 300 may be implemented through the interconnectivity of multiple devices as depicted in FIG. 3A. In other embodiments, the system 300 is implemented through a computing device 304 communicatively coupled to the AMM 306. Regardless of the implementation of the system 300, FIG. 3B depicts the illustrative computing device 304. The computing device 304 may utilize hardware, software, and/or firmware, according to embodiments shown and described herein. While in some embodiments, the computing device 304 may be configured as a general-purpose computer with the requisite hardware, software, and/or firmware, in some embodiments, the computing device 304 may be configured as a special purpose computer designed specifically for performing the functionality described herein.

Referring more specifically to FIG. 3B, the computing device 304 includes a processor 330, input/output hardware 332, network interface hardware 334, a data storage component 336, and a memory module 340. The memory module 340 may be machine readable memory (which may also be referred to as a non-transitory processor readable memory). The memory module 340 may be configured as volatile and/or nonvolatile memory and, as such, may include random access memory (including SRAM, DRAM, and/or other types of random access memory), flash memory, registers, compact discs (CD), digital versatile discs (DVD), and/or other types of storage components. A computer program product may be embodied by the memory module 340 such that when executed by the processor 330, cause the processor 330 to perform one or more methods described in more detail herein.

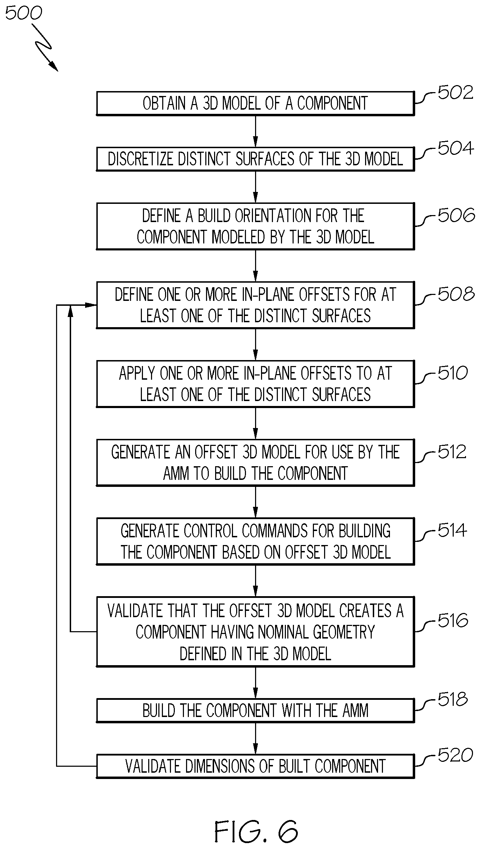

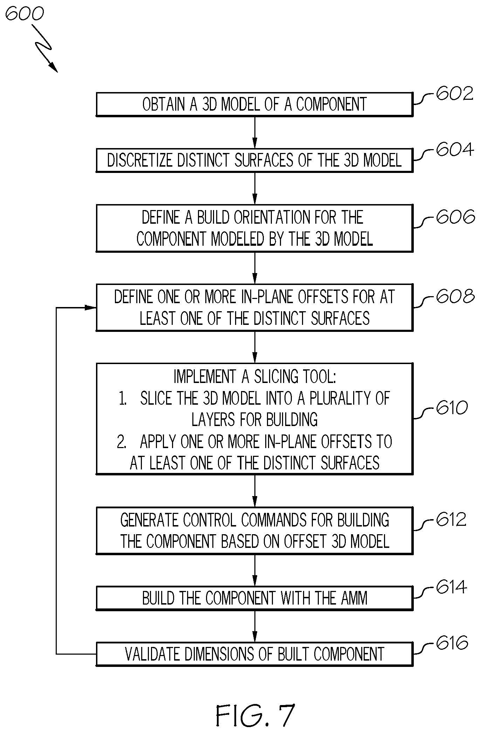

For example, the memory module 340 may be configured to store operating logic 342, a surface offset logic 344a (e.g., logic enabling one or more processes defined by method 500 depicted in FIG. 6 or method 600 depicted in FIG. 7), a slicing tool 344b, and validation logic 344c (each of which may be embodied as a computer program, firmware, or hardware, as an example). A local interface 346 is also included in FIG. 3B and may be implemented as a bus or other interface to facilitate communication among the components of the computing device 304.

The processor 330 may include any processing component(s) configured to receive and execute programming instructions (such as from the data storage component 336 and/or the memory module 340). The instructions may be in the form of a machine readable instruction set stored in the data storage component 336 and/or the memory module 340. The input/output hardware 332 may include a monitor, keyboard, mouse, printer, camera, microphone, speaker, and/or other device for receiving, sending, and/or presenting data. The network interface hardware 334 may include any wired or wireless networking hardware, such as a modem, LAN port, Wi-Fi card, WiMax card, mobile communications hardware, and/or other hardware for communicating with other networks and/or devices.

It should be understood that the data storage component 336 may reside local to and/or remote from the computing device 304 and may be configured to store one or more pieces of data for access by the computing device 304 and/or other components. As illustrated in FIG. 3B, the data storage component 336 may store a 3D model 100 (FIG. 1) defining nominal geometry of a component 308 to for manufacture, an offset 3D model 200, one or more in-plane offsets 337, attributes of the AMM 338, and/or a set of additive manufacturing machine control commands, labeled G-CODE 339, for building the component 308 with the AMM 306.

As described herein the 3D model 100 (FIG. 2C) and offset 3D model 200 (FIG. 2C) are CAD models of the component 308 to be manufactured. The CAD models may define attributes of the component 308 for additive manufacturing, such as a defined geometry, material, design tolerances, powder sizes distribution, binder type and amounts per layer, sintering profile, expansion factors, and the like. The in-plane offsets 337 stored in the data storage component 336 define one or more magnitudes and/or algorithms defining the magnitudes for in-plane offsets to be applied to surfaces of a 3D model 100. The attributes of the AMM 338 include, but are not limited to, the area of the focal point (e.g., the spot size) of the energy impinging the working material, the power of the energy source, the dwell time of the energy source, and/or other attributes. Additionally, the set of additive manufacturing machine control commands for building the component 308 with the AMM 306 may be embodied as G-CODE 339 or other AMM specific commands for controlling the AMM 306.

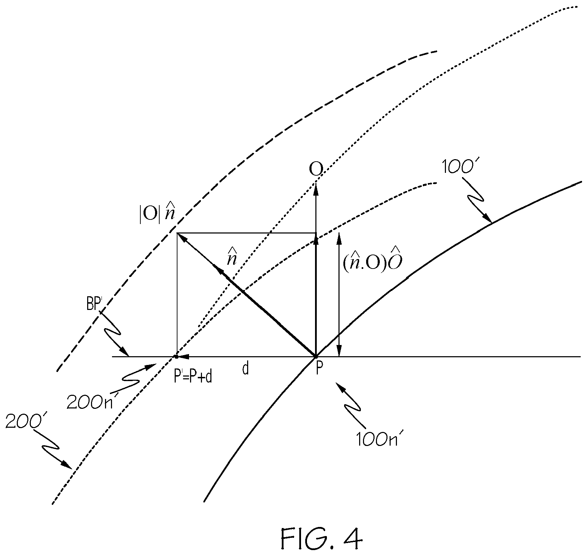

Before describing methods for generating and applying in-plane offsets to a 3D model 200 (FIG. 2C) of a component 308 and related processes, an illustrative example of an in-plane offset 200' is depicted in FIG. 4 and described herein. For example, FIG. 4 depicts an illustration of an in-plane offset 200' for one dimension of a build plane BP' of a surface 100' of a component 308 (FIG. 3B). As illustrated, point 100n' is a point on the surface 100' of a 3D model 100 (FIG. 1) defining the nominal geometry of the component 308 for manufacture. The schematic depicts three offsets. The first offset O is an offset of surface 100' that is perpendicular to the build plane BP'. The second offset $|O|$ is an offset of surface 100' that is perpendicular to the surface 100' of the 3D model 100 as depicted by the arrow $\hat{n}$. The first offset O and second offset $|O|$ are not in-plane offsets. These offsets fail to preserve the Z-height of a component 308 during an additive manufacturing process. However, the third offset depicts an in-plane offset 200' of surface 100'. The in-plane offset 200' changes the position of the point 100n' (P) by an offset distance d to point 200n' (P') within the build plane BP'. Furthermore, the in-plane offset 200' may vary in magnitude as a function of build direction, which preserves the nominal z-height of component 308.

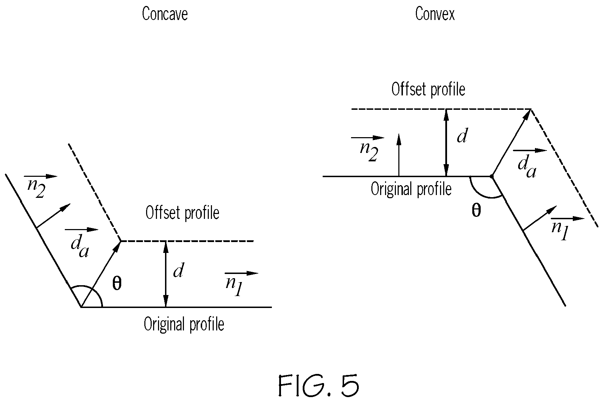

Turning to FIG. 5, illustrative examples for computing offset values for geometry involving corners are depicted. As discussed above, offsets having a uniform magnitude fail to preserve critical dimensions of the manufactured components. For example, dimensions defining corners are an example of critical dimensions. When uniform offset values are applied to surfaces leading into corners and the corners formed therefrom, the resulting corner, is distorted when the component is fabricated. As similarly discussed herein with respect to offsetting faces, corners need to be offset in accordance with the surfaces that mate to form the corresponding corners. To assist with explanation for improving offset geometry associated with corners of a component, FIG. 5 depicts an illustrative original profile and offset profile for a concave corner and a convex corner. As described herein, in-plan offsets are determined for distinct surfaces. In a similar fashion, an adjustment corner offset may be determined using the following equation: $\vec{d}_a \quad \dfrac{\vec{n}_1 + \vec{n}_2}{\|\vec{n}_1 + \vec{n}_2\|} \times \dfrac{d}{\sin\left(\frac{\theta}{2}\right)}$ , where $\vec{n}_1$ and $\vec{n}_2$ are the in-plane offsets for the surfaces that converge to form the corner, $\theta$ is the angle of the corner, $d$ is the distance between the offset profile and the original profile for the surface adjacent the corner. In embodiments, a corner offset $\vec{d}_a$ may be determined in finite increments extending from the apex of a corner as it converges with the in-plane offset (e.g., $\vec{n}_1$ and $\vec{n}_2$) of the surfaces adjacent to the corners. Corner offset correction and offsets for discrete surfaces are used to form the in-plane offsets to a 3D model.

Referring now to FIGS. 6 and 7, flow diagrams of illustrative methods 500, 600 for generating and applying in-plane offsets to a 3D model 100 (FIG. 1) will now be described. The illustrative methods 500, 600 will be described with reference to elements depicted and described with reference to FIGS. 1-5. Methods 500, 600 and other methods described herein may be performed using any suitable combination of hardware (e.g., circuit(s)), software or manual means. In one or more embodiments, the system 300 (FIGS. 3A-3B) is configured to perform the methods 500, 600. The system 300 may be a special-purpose electronic device configured to perform operations not performable by a general-purpose computer or device. A computer program product embodying these processes may be stored by any non-transitory tangible medium including a fixed disk, a floppy disk, a CD, a DVD, a Flash drive, or a magnetic tape. Examples of these methods will be described below with respect to embodiments of the system 300, but embodiments are not limited thereto.

Referring to FIG. 6, the flow diagram depicts a method 500 for generating and applying in-plane offsets to a 3D model 100 of a component 308 thereby generating an offset 3D model 200. It should be understood that blocks corresponding to processes of the method 500 may be executed in an order different than the order depicted and described herein. Additionally, some process blocks may be omitted such that the only a portion of the processes described herein are executed.

At block 502 of the method 500, the computer program product executed by a computing device 304 is configured to obtain a 3D model 100 of a component 308 for building with an AMM 306. The process of obtaining the 3D model 100 may include retrieving a 3D model 100 stored in the data storage component 336 or importing a 3D model 100 from a CAD program. A user may interact with a CAD program to design the 3D model 100 having nominal geometry for a desired component 308. As used herein, nominal geometry refers to the dimensions of the component 308 as manufactured. That is, implementations of the methods described herein do not require a user to design offsets into the geometry of the 3D model 100. That is, the methods described herein provide an automatic process for compensating a 3D model 100 for manufacturing with an AMM 306 so that only a single 3D model 100 having nominal geometry of the component 308 needs to be generated by a user.

At block 504, the computer program product executed by a computing device 304 is configured to discretize distinct surfaces 110, 120, 130, 140, 150, 160, 170 of the 3D model 100. The process of discretizing distinct surfaces 110, 120, 130, 140, 150, 160, 170 may include defining faces and boundaries joining one or more faces together. In some embodiments, the process of discretizing distinct surface 110, 120, 130, 140, 150, 160, 170 may include defining a plurality of points for each face and boundary of the distinct surfaces 110, 120, 130, 140, 150, 160, 170. In some embodiments, surfaces within holes on a component may not be discretized. However, in embodiments where points within holes of a component are defined, they may be excluded from application of offsets. Instead the surfaces for which the holes are formed within may be treated as solid surfaces.

At block 506, the computer program product executed by a computing device 304 is further configured to define the build orientation for the 3D model 100 for the component 308. The build orientation defines the orientation in which the 3D model 100 is oriented for building with the AMM 306. More specifically, the build orientation includes identifying the surface of the 3D model 100 that corresponds with the initial build plane BP. Furthermore, the build orientation includes a build direction in which build planes for the 3D model 100 are assembled by the AMM 306.

At block 508, the computer program product executed by a computing device 304 is further configured to define one or more in-plane offsets 5, 10, 15, 20, 30, 40 for at least one of the distinct surfaces 110, 120, 130, 140, 150, 160, 170. In some embodiments, defining the one or more in-plane offsets may include calculating, based on attributes of the AMM 306 such as the energy source's interaction with the working material, the effective heating and fusing area (e.g., the voxel or region of a build plane). For example, and without limitation, when the effective fusing area is greater than the spot size of the energy source, an in-plane offset may be set to reduce the build plane sizes of surfaces of the 3D model 100. Moreover, when the effective fusing area is less than the spot size of the energy sources, an in-plane offset may be configured to increase the build plane sizes of surfaces of the 3D model 100 so that the resulting built component 308 has geometry that matches the nominal geometry of the 3D model 100 of the component 308. In embodiments, an in-plane offset for a surface may vary in magnitude over the surface.

Moreover, a first in-plane offset applied to a first discretized distinct surface of the 3D model 100 may be different than a second in-plane offset applied to a second discretized distinct surface of the 3D model 100. The first discretized distinct surface and the second discretized distinct surface may be neighboring surfaces sharing a boundary. To merge the two surfaces smoothly, for example, a magnitude of the first in-plane offset for a first surface may change in magnitude for points close to a boundary between two surfaces or as it merges into a second in-plane offset for a second surface adjacent to the first surface. Furthermore, in embodiments, defining the one or more in-plane offsets for a 3D model 100 includes preserving the Z-heights of the component 308. That is, the in-plane offsets for build planes approaching the max Z-height of a component 308 are configured so that layers in the build are not skipped.

In some embodiments, a user may adjust or define particular in-plane offsets for surfaces based experimentation and/or simulation of builds of the component 308.

At block 510, the computer program product executed by a computing device 304 is further configured to apply the one or more in-plane offsets to at least one of the discretized distinct surfaces of the 3D model 100. That is, application of the in-plane offsets causes points defining the surfaces of the 3D model 100 to be repositioned according to magnitudes and directions (within the build plane, e.g., the X-Y plane) of the in-plane offset. The one or more in-plane offsets change the position of points defining the nominal geometry of the component 308 of the 3D model 100 where the change in position of the points occurs in a direction perpendicular to the build direction. In some embodiments, the one or more in-plane offsets are applied to each of the discretized distinct surfaces of the 3D model 100. Additionally, as described herein, a magnitude of the one or more in-plane offsets for the at least one discretized distinct surfaces changes across the build planes of the at least one of the discretized distinct surfaces along the build direction. The changes in magnitude may correspond to an algorithm based on the contour of the surface and the distance from the initial build plane BP to the build planes of intersecting the surface in the build direction.

Moreover, at block 512 of the method 500, the computer program product executed by a computing device 304 is further configured to generate an offset 3D model 200. The offset 3D model 200 is a CAD model of the component 308 for manufacturing with the AMM 306. The offset 3D model 200 may be an STL file, a B-rep model, or other file type for storing a 3D model.

The offset 3D model 200 includes geometry of the component 308 that has been changed as a result of applying the one or more in-plane offsets to one or more of the distinct surfaces of the 3D model 100. The process of generating an offset 3D model 200 may include merging faces of the offset surfaces and not offset surfaces of the 3D model. The points of the surfaces (e.g., offset surfaces and the other surfaces) are fit together such that boundary points and/or points near boundaries that are shared between two neighboring surfaces are connected with smooth transitions. For example, the smooth transitions are generated to avoid step changes in the built part. As described herein, one method for assuring smooth transitions at boundaries is to vary the magnitudes of the in-plane offsets of adjacent or neighboring surfaces near the shared boundary.

In some embodiments, generating the offset 3D model 200 includes rendering a 3D visualization of the offset 3D model 200. The 3D visualization of the offset 3D model 200 may be presented on a display device. The 3D visualization may be reviewed and revised by a user to assure the component 308 is ready for building.

At block 514, a slicing tool 344b may be implemented to generate additive manufacturing machine control commands 339 for building the component 308 based on the plurality of sliced layers of the offset 3D model 200 with the AMM 306. The set of additive manufacturing machine control commands 339 may be embodied as a g-code file or a similar type of file depending on the AMM 306. The g-code file defines a series of commands and associated values for the various components of the AMM 306 to operate and manufacture the component 308. For example, a slicing tool 344b may be implemented to slice the offset 3D model 200 into a plurality of layers for building with the additive manufacturing machine and generate a slice file including a set of additive manufacturing machine control commands 339 for building the component 308 based on the plurality of layers of the offset 3D model 200 with the AMM 306.

In some embodiments, the method 500, for example, as implemented by a computer program product executed by a computing device 304 includes validation processes (e.g., validation logic 344c). At block 516, a first validation process may be implemented. The first validation process may include simulating a build of the offset 3D model 200. The simulation may be a computer generated simulation implementing attributes of the AMM 306 and the materials so that the simulation may provide a realistic build of the component 308. The simulated build of the component 308 is compared to the nominal geometry defined in the 3D model 100 to determine whether the in-plane offsets applied to the 3D model 100 will result in desired component geometry. If differences between the geometry of the simulated built component and the nominal geometry defined in the 3D model 100 are determined, the differences may be fed back to block 508 where they may be incorporated into the generation of the in-plane offsets for a future simulation and/or build. In some embodiments, multiple simulations may be performed and statistically relevant differences between the simulated built component and the nominal geometry defined in the 3D model 100 may be determined. The statistically relevant differences may be fed back to block 508 and incorporated into the generation of the in-plane offsets for a future simulation and/or build.

At block 518, the method 500, for example, as implemented by a computer program product executed by a computing device 304 may communicate with an AMM 306 and cause the AMM 306 to perform a build operation based on the slice file.

At block 520, a second validation process (e.g., validation logic 344c) may be performed. The second validation process may include scanning a built component 308 with a 3D scanner or manually measuring the built component 308. The as-manufactured measurements may be input to the computing device 304, for example, as labels on a 3D model 100 of the component 308. The as-manufactured measurements are compared with the nominal geometry defined in the 3D model 100 to determine whether any differences between the two exist. If there are differences between the geometry of the built component 308 and the nominal geometry defined in the 3D model 100, the differences may be fed back to block 508 where they may be incorporated into the generation of the in-plane offsets for a future simulation and/or build. In some embodiments, multiple built components may be measured so that statistically relevant differences between the built component 308 and the nominal geometry defined in the 3D model 100 may be determined. The statistically relevant differences may be fed back to block 508 and incorporated into the generation of the in-plane offsets for a future simulation and/or build.

The aforementioned method 500 provides an intermediate offset 3D model 200 of the component 308. This method 500 assists with developing and improving the automatic generation of in-plane offsets because the offset 3D model 200 provides a model with offsets applied before the AMM 306 manufactures the component 308. The computing device 304 may more readily determine how printer effects (e.g., attributes of the AMM 306) and the working materials effect an actual build of the component 308. In some embodiments, the generation of in-plane offsets may include an artificial learning process that is capable of analyzing applied in-plane offsets and as-build or simulated results of a build to further refine the in-plane offsets to be applied for particular surface geometries and particular AMMs.

In some embodiments, the generation of an offset 3D model 200 may not be necessary. Instead, the in-plane offsets may be directly incorporated by a slicing tool 344b. Referring now to FIG. 7, the flow diagram of a method 600 for generating and applying in-plane offsets to a digital 3D model 100 of a component 308. For brevity discussion of blocks 602-608 will not be repeated as blocks 602-608 correspond to the operations described with respect to blocks 502-508 of method 500 depicted in FIG. 6.

At block 610, the computer program product executed by a computing device 304 is configured to implement a slicing tool 344b. The slicing tool 344b operates in a similar manner to commercially available slicing tools and in embodiments is configured to slice the 3D model 100 or the offset 3D model 200 into a plurality of layers for building with the additive manufacturing machine. In some embodiments, the slicing tool 344b is configured to apply the one or more in-plane offsets directly to the sliced layers of the 3D model 100 as the slicing tool 344b processes the 3D model 100. In embodiments, as the slicing tool 344b defines a build layer, which is parallel to the build plane, the one or more in-plane offsets for the distinct surfaces of the model present in the sliced build layer are applied. The in-plane offsets may be specific to a particular surface. The slicing tool 344b, when slicing a layer selects the one or more in-plane offsets that corresponds to the one or more surfaces in that layer that are to be offset and applies the appropriate in-plane offset thereto. As described herein, the in-plane offset changes the position of points defining the surface in the build plane. By doing so, the in-plane offsets may preserve the Z-height of a component 308.

In some embodiments, the slicing tool 344b may be configured to first slice the 3D model 100 into layers that are multiple times thicker than what would be printed. In doing so, in-plane offsets may be applied across surface thicknesses that are larger than surface thickness of a layer that is ready to be processed by the AMM 306. This may improve the layer to layer surface smoothness because variations in the magnitude of the in-plane offset across the surface may be incorporated to better account for boundaries between different adjacent distinct surfaces of the component 308. The large layers may be processed one or more additional times by the slicing tool 344b to generate slicing having the required thickness for building with the AMM 306.

At block 612, the slicing tool 344b is further configured to generate additive manufacturing machine control commands 339 for building the component 308 with the AMM 306. The set of additive manufacturing machine control commands 339 may be embodied as a g-code file. The g-code file defines a series of commands and associated values for the various components of the AMM 306 to operate and manufacture the component 308.

At block 614, the method 600, for example, as implemented by a computer program product executed by a computing device 304 may communicate with an AMM 306 and cause the AMM 306 to perform a build operation based on the slice file.

At block 616, a validation process (e.g., validation logic 344c) may be performed. The validation process may include scanning a built component 308 with a 3D scanner or manually measuring the built component 308. The as-manufactured measurements may be input to the computing device 304, for example, as labels on a 3D model 100 of the component 308. The as-manufactured measurements are compared with the nominal geometry defined in the 3D model 100 to determine whether any differences between the two exist. If there are differences between the geometry of the built component 308 and the nominal geometry defined in the 3D model 100, the differences may be fed back to block 608 where they may be incorporated into the generation of the in-plane offsets for a future simulation and/or build. In some embodiments, multiple built components may be measured so that statistically relevant differences between the built component and the nominal geometry defined in the 3D model 100 may be determined. The statistically relevant differences may be fed back to block 608 and incorporated into the generation of the in-plane offsets for a future simulation and/or build.

Implementation of method 600, does not require that an offset 3D model 200 be generated prior to slicing the 3D model 100 into layers for building by the AMM 306.

The functional blocks and/or flow diagram elements described herein may be translated onto machine-readable instructions or as a computer program product, which when executed by a computing device, causes the computing device to carry out the functions of the blocks. As nonlimiting examples, the machine-readable instructions may be written using any programming protocol, such as: descriptive text to be parsed (e.g., such as hypertext markup language, extensible markup language, etc.), (ii) assembly language, (iii) object code generated from source code by a compiler, (iv) source code written using syntax from any suitable programming language for execution by an interpreter, (v) source code for compilation and execution by a just-in-time compiler, etc. Alternatively, the machine-readable instructions may be written in a hardware description language (HDL), such as logic implemented via either a field programmable gate array (FPGA) configuration or an application-specific integrated circuit (ASIC), or their equivalents. Accordingly, the functionality described herein may be implemented in any conventional computer programming language, as pre-programmed hardware elements, or as a combination of hardware and software components.

It should now be understood that the systems, methods, and computer program products implementing the methods described herein provide processes for generating and applying in-plane offsets to a 3D digital model of a component. The in-plane offsets are configured to address thermal effects and/or mechanical effects of materials the component is manufactured from using an additive manufacturing machine and/or attributes of the additive manufacturing machine. In some embodiments, a method includes discretizing distinct surfaces of a 3D model defining nominal geometry of a component to be manufactured using an additive manufacturing machine, defining a build orientation of the 3D model, the build orientation comprises an initial build plane and a build direction, applying one or more in-plane offsets to at least one of the discretized distinct surfaces of the 3D model, and generating an offset 3D model for use by the additive manufacturing machine to manufacture the component such that the manufactured component comprises nominal geometry defined by the 3D model, wherein the offset 3D model defines nominal geometry of the component offset by the one or more in-plane offsets applied to the at least one of the discretized distinct surfaces of the 3D model. The method may further include implementing a slicing tool configured to slice the offset 3D model into a plurality of layers for building with the additive manufacturing machine, and generate additive manufacturing machine control commands for building the component based on the plurality of layers of the offset 3D model with the additive manufacturing machine.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

Further aspects of the disclosure are provided by the subject matter of the following clauses.

A computer program product comprising a non-transitory computer-readable medium storing instructions, that when executed by a computer processor, cause the computer processor to perform a method. The method comprises discretizing distinct surfaces of a 3D model defining nominal geometry of a component to be manufactured using an additive manufacturing machine; defining a build orientation of the 3D model, the build orientation comprises an initial build plane and a build direction; applying one or more in-plane offsets to at least one of the discretized distinct surfaces of the 3D model; and generating an offset 3D model for use by the additive manufacturing machine to manufacture the component such that a manufactured component comprises the nominal geometry defined by the 3D model, wherein the offset 3D model defines the nominal geometry of the component offset by the one or more in-plane offsets applied to the at least one of the discretized distinct surfaces of the 3D model.

The computer program product of any preceding clause, further comprising instructions for performing the method comprising implementing a slicing tool configured to: slice the offset 3D model into a plurality of layers for building with the additive manufacturing machine, and generate additive manufacturing machine control commands for building the component based on the plurality of layers of the offset 3D model with the additive manufacturing machine.

The computer program product of any preceding clause, wherein the additive manufacturing machine control commands are stored as a g-code file.

The computer program product of any preceding clause, further comprising instructions for performing the method comprising rendering a 3D visualization of the offset 3D model on a display device.

The computer program product of any preceding clause, wherein the one or more in-plane offsets change a position of points defining the nominal geometry of the component in the 3D model, and the changes in the position of the points occurs in a direction perpendicular to the build direction.

The computer program product of any preceding clause, wherein the one or more in-plane offsets are applied to each of the discretized distinct surfaces of the 3D model.

The computer program product of any preceding clause, wherein a magnitude of the one or more in-plane offsets for the at least one of the discretized distinct surfaces changes across build planes of the at least one of the discretized distinct surfaces along the build direction.

The computer program product of any preceding clause, wherein a first in-plane offset applied to a first discretized distinct surface of the 3D model is different than a second in-plane offset applied to a second discretized distinct surface of the 3D model.

The computer program product of any preceding clause, wherein the first discretized distinct surface of the 3D model shares a boundary with the second discretized distinct surface, a magnitude of the first in-plane offset and a magnitude of the second in-plane offset merges together along the boundary.

The computer program product of any preceding clause, wherein applying the one or more in-plane offsets to the 3D model preserves heights, in the build direction, of the nominal geometry of the component.

The computer program product of any preceding clause, wherein discretizing the distinct surfaces of the 3D model includes defining a plurality of points on the distinct surfaces.

The computer program product of any preceding clause, wherein the offset 3D model is at least one of an STL file or a B-rep model.

The computer program product of any preceding clause, wherein the one or more in-plane offsets is defined by at least one of an attribute of the additive manufacturing machine or an attribute of a material for manufacturing the component.

A computer program product comprising a non-transitory computer-readable medium storing instructions, that when executed by a computer processor, cause the computer processor to perform a method comprising discretizing distinct surfaces of a 3D model defining nominal geometry of a component to be manufactured using an additive manufacturing machine; defining a build orientation of the 3D model, the build orientation comprises an initial build plane and a build direction; and implementing a slicing tool. The slicing tool is configured to slice the 3D model into a plurality of layers for building with the additive manufacturing machine, apply one or more in-plane offsets to one or more of the plurality of layers for at least one of the discretized distinct surfaces of the 3D model, and generate additive manufacturing machine control commands for building the component incorporating the on the one or more in-plane offsets applied to the one or more of the plurality of layers of the 3D model with the additive manufacturing machine.

The computer program product of any preceding clause, wherein the one or more in-plane offsets change a position of points defining the nominal geometry of the component in the 3D model, and the changes in the position of the points occurs in a direction perpendicular to the build direction.

The computer program product of any preceding clause, wherein the one or more in-plane offsets are applied to each of the discretized distinct surfaces of the 3D model.

The computer program product of any preceding clause, wherein applying the one or more in-plane offsets to the 3D model preserves heights, in the build direction, of the nominal geometry of the component.

The computer program product of any preceding clause, wherein the one or more in-plane offsets is defined by at least one of an attribute of the additive manufacturing machine or an attribute of a material for manufacturing the component.

A method of making a component using an additive manufacturing machine, the method comprising discretizing distinct surfaces of a 3D model defining nominal geometry of the component to be manufactured using the additive manufacturing machine; defining a build orientation of the 3D model, the build orientation comprises an initial build plane and a build direction; applying one or more in-plane offsets to at least one of the discretized distinct surfaces of the 3D model; and generating an offset 3D model for use by the additive manufacturing machine to manufacture the component such that a manufactured component comprises the nominal geometry defined by the 3D model, wherein the offset 3D model defines the nominal geometry of the component offset by the one or more in-plane offsets applied to the at least one of the discretized distinct surfaces of the 3D model.

The method of any preceding clause, further comprising implementing a slicing tool configured to slice the offset 3D model into a plurality of layers for building with the additive manufacturing machine, and generate additive manufacturing machine control commands for building the component based on the plurality of layers of the offset 3D model with the additive manufacturing machine.

**Claims**

1. A computer program product comprising a non-transitory computer-readable medium storing instructions, that when executed by a computer processor (330), cause the computer processor (330) to perform a method comprising:

   discretizing distinct surfaces (110, 120, 130, 140, 150, 160, 170) of a 3D model (100) defining nominal geometry of a component (308) to be manufactured using an additive manufacturing machine;
   defining a build orientation of the 3D model (100), the build orientation comprises an initial build plane and a build direction;
   applying one or more in-plane offsets (5, 10, 15, 20, 30, 40) to at least one of the discretized distinct surfaces (110, 120, 130, 140, 150, 160, 170) of the 3D model (100); and
   generating an offset 3D model (200) for use by the additive manufacturing machine to manufacture the component (308) such that a manufactured component comprises the nominal geometry defined by the 3D model (100), wherein the offset 3D model (200) defines the nominal geometry of the component (308) offset by the one or more in-plane offsets (5, 10, 15, 20, 30, 40) applied to the at least one of the discretized distinct surfaces (110, 120, 130, 140, 150, 160, 170) of the 3D model (100).

2. The computer program product of claim 1, further comprising instructions for performing the method comprising: implementing a slicing tool (344b) configured to:

   slice the offset 3D model (200) into a plurality of layers for building with the additive manufacturing machine, and generate additive manufacturing machine control commands (339) for building the component (308) based on the plurality of layers of the offset 3D model (200) with the additive manufacturing machine.

3. The computer program product of claim 2, wherein the additive manufacturing machine control commands (339) are stored as a g-code file.

4. The computer program product of claim 1, further comprising instructions for performing the method comprising: rendering a 3D visualization of the offset 3D model (200) on a display (302a) device.

5. The computer program product of claim 1, wherein the one or more in-plane offsets (5, 10, 15, 20, 30, 40) change a position of points defining the nominal geometry of the component (308) in the 3D model (100), and the changes in the position of the points occurs in a direction perpendicular to the build direction.

6. The computer program product of claim 1, wherein the one or more in-plane offsets (5, 10, 15, 20, 30, 40) are applied to each of the discretized distinct surfaces (110, 120, 130, 140, 150, 160, 170) of the 3D model (100).

7. The computer program product of claim 1, wherein a magnitude of the one or more in-plane offsets (5, 10, 15, 20, 30, 40) for the at least one of the discretized distinct surfaces (110, 120, 130, 140, 150, 160, 170) changes across build planes of the at least one of the discretized distinct surfaces (110, 120, 130, 140, 150, 160, 170) along the build direction.

8. The computer program product of claim 1, wherein a first in-plane offset (5, 10, 15, 20, 30, 40) applied to a first discretized distinct surface (110, 120, 130, 140, 150, 160, 170) of the 3D model (100) is different than a second in-plane offset (5, 10, 15, 20, 30, 40) applied to a second discretized distinct surface (110, 120, 130, 140, 150, 160, 170) of the 3D model (100).

9. The computer program product of claim 8, wherein the first discretized distinct surface (110, 120, 130, 140, 150, 160, 170) of the 3D model (100) shares a boundary (115A, 115B, 115C, 115D, 115E, 165, 135, 145, 155, 165, 175A, 175B, 175C, 175D) with the second discretized distinct surface (110, 120, 130, 140, 150, 160, 170), a magnitude of the first in-plane offset (5, 10, 15, 20, 30, 40) and a magnitude of the second in-plane offset (5, 10, 15, 20, 30, 40) merges together along the boundary.

10. The computer program product of claim 1, wherein applying the one or more in-plane offsets (5, 10, 15, 20, 30, 40) to the 3D model (100) preserves heights, in the build direction, of the nominal geometry of the component (308).

11. The computer program product of claim 1, wherein discretizing the distinct surfaces (110, 120, 130, 140, 150, 160, 170) of the 3D model (100) includes defining a plurality of points on the distinct surfaces (110, 120, 130, 140, 150, 160, 170).

12. The computer program product of claim 1, wherein the offset 3D model (200) is at least one of an STL file or a B-rep model.

13. The computer program product of claim 1, wherein the one or more in-plane offsets (5, 10, 15, 20, 30, 40) defined by at least one of an attribute of the additive manufacturing machine or an attribute of a material for manufacturing the component (308).

14. A method of making a component (308) using an additive manufacturing machine, the method comprising:

discretizing distinct surfaces (110, 120, 130, 140, 150, 160, 170) of a 3D model (100) defining nominal geometry of the component (308) to be manufactured using the additive manufacturing machine;
defining a build orientation of the 3D model (100), the build orientation comprises an initial build plane and a build direction;
applying one or more in-plane offsets (5, 10, 15, 20, 30, 40) to at least one of the discretized distinct surfaces (110, 120, 130, 140, 150, 160, 170) of the 3D model (100); and
generating an offset 3D model (200) for use by the additive manufacturing machine to manufacture the component (308) such that a manufactured component comprises the nominal geometry defined by the 3D model (100), wherein the offset 3D model (200) defines the nominal geometry of the component (308) offset by the one or more in-plane offsets (5, 10, 15, 20, 30, 40) applied to the at least one of the discretized distinct surfaces (110, 120, 130, 140, 150, 160, 170) of the 3D model (100).

15. The method of claim 14, further comprising:
implementing a slicing tool (344b) configured to:

slice the offset 3D model (200) into a plurality of layers for building with the additive manufacturing machine, and
generate additive manufacturing machine control commands (339) for building the component (308) based on the plurality of layers of the offset 3D model (200) with the additive manufacturing machine.

FIG.1

FIG. 2A

EP 4 464 503 A1

FIG. 2B

FIG. 2C

EP 4 464 503 A1

100

200

Z

Y → X

BP

FIG. 2D

FIG. 3A

FIG.3B

FIG. 4

Concave

Convex

Offset profile

$\overrightarrow{n_2}$

$d$

Original profile

$\overrightarrow{d_a}$

$\overrightarrow{n_2}$

$\overrightarrow{d_a}$

Offset profile

$d$

$\theta$

$\overrightarrow{n_1}$

$\theta$

$\overrightarrow{n_1}$

Original profile

FIG. 5

500

OBTAIN A 3D MODEL OF A COMPONENT — 502

DISCRETIZE DISTINCT SURFACES OF THE 3D MODEL — 504

DEFINE A BUILD ORIENTATION FOR THE COMPONENT MODELED BY THE 3D MODEL — 506

DEFINE ONE OR MORE IN-PLANE OFFSETS FOR AT LEAST ONE OF THE DISTINCT SURFACES — 508

APPLY ONE OR MORE IN-PLANE OFFSETS TO AT LEAST ONE OF THE DISTINCT SURFACES — 510

GENERATE AN OFFSET 3D MODEL FOR USE BY THE AMM TO BUILD THE COMPONENT — 512

GENERATE CONTROL COMMANDS FOR BUILDING THE COMPONENT BASED ON OFFSET 3D MODEL — 514

VALIDATE THAT THE OFFSET 3D MODEL CREATES A COMPONENT HAVING NOMINAL GEOMETRY DEFINED IN THE 3D MODEL — 516

BUILD THE COMPONENT WITH THE AMM — 518

VALIDATE DIMENSIONS OF BUILT COMPONENT — 520

FIG. 6

600

OBTAIN A 3D MODEL OF A COMPONENT ⟋602

DISCRETIZE DISTINCT SURFACES OF THE 3D MODEL ⟋604

DEFINE A BUILD ORIENTATION FOR THE
COMPONENT MODELED BY THE 3D MODEL ⟋606

DEFINE ONE OR MORE IN-PLANE OFFSETS FOR AT
LEAST ONE OF THE DISTINCT SURFACES ⟋608

IMPLEMENT A SLICING TOOL:
1. SLICE THE 3D MODEL INTO A PLURALITY OF
   LAYERS FOR BUILDING
2. APPLY ONE OR MORE IN-PLANE OFFSETS TO
   AT LEAST ONE OF THE DISTINCT SURFACES ⟋610

GENERATE CONTROL COMMANDS FOR BUILDING
THE COMPONENT BASED ON OFFSET 3D MODEL ⟋612

BUILD THE COMPONENT WITH THE AMM ⟋614

VALIDATE DIMENSIONS OF BUILT COMPONENT ⟋616

FIG. 7

Europäisches
Patentamt

European
Patent Office

Office européen
des brevets

## EUROPEAN SEARCH REPORT

**Application Number**

EP 24 17 2401

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/349440 A1 (DIEGO GUTIERREZ VICTOR [ES] ET AL) 11 November 2021 (2021-11-11) * paragraphs [0014] - [0022], [0032], [0034] - [0041], [0050], [0054], [0055], [0066] - [0068]; figures 1, 2A/B/C, 6 * | 1-10, 12-15 | INV. B29C64/393 B33Y10/00 B33Y50/00 B33Y50/02 G06F30/17 G06F30/20 |
| | ----- | | |
| X | LUAN HE ET AL: "Prescriptive Modeling and Compensation of In-Plane Shape Deformation for 3-D Printed Freeform Products", IEEE TRANSACTIONS ON AUTOMATION SCIENCE AND ENGINEERING, vol. 14, no. 1, 1 January 2017 (2017-01-01), pages 73-82, XP093196971, US ISSN: 1545-5955, DOI: 10.1109/TASE.2016.2608955 Retrieved from the Internet: URL:https://ieeexplore.ieee.org/stampPDF/g etPDF.jsp?tp=&arnumber=7588128&ref=aHR0cHM 6Ly9pZWVleHBsb3JlLmllZWUub3JnL2Fic3RyYWN0L 2RvY3VtZW50Lzc1ODgxMjg=> * Sec. I; II A/B; III; IV. A/B/D;; figures 2, 5, 6,7,9 * | 1-6,8,9, 11,12, 14,15 | ADD. G06F111/10 G06F119/18 |
| | ----- | | |
| X | US 2023/117766 A1 (YANG PINGHAI [US] ET AL) 20 April 2023 (2023-04-20) * paragraphs [0011], [0013], [0014], [0021], [0025] - [0029], [0033], [0034], [0037], [0050]; figures 4,5 * | 1-5,7-9, 11-15 | |
| | ----- | | |

| | | |
|---|---|---|
| | | TECHNICAL FIELDS SEARCHED (IPC) |
| | | B29C G06F B33Y |

The present search report has been drawn up for all claims

| Place of search | Date of completion of the search | Examiner |
|---|---|---|
| Munich | 21 August 2024 | Lampmann, Arne |

EPO FORM 1503 03.82 (P04C01)

## ANNEX TO THE EUROPEAN SEARCH REPORT
### ON EUROPEAN PATENT APPLICATION NO.

EP 24 17 2401

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2024

| Patent document cited in search report | Publication date | Patent family member(s) | Publication date |
|---|---|---|---|
| US 2021349440 A1 | 11-11-2021 | US 2021349440 A1<br>WO 2020159508 A1 | 11-11-2021<br>06-08-2020 |
| US 2023117766 A1 | 20-04-2023 | CN 115994392 A<br>EP 4170537 A1<br>US 2023117766 A1 | 21-04-2023<br>26-04-2023<br>20-04-2023 |

EPO FORM P0459

For more details about this annex : see Official Journal of the European Patent Office, No. 12/82